# EUROPÄISCHE PATENTSCHRIFT

(11) **EP 1 785 337 B1**
(45) Veröffentlichungstag und Bekanntmachung des Hinweises auf die Patenterteilung: **06.01.2010**
(21) Anmeldenummer: 06021460.8
(22) Anmeldetag: 13.10.2006
(51) Int. Cl.: B62D 33/04, B60P 3/20, E04B 1/80

(54) **Aufbau für Transportfahrzeuge**
Load compartment for lorries
Compartiment de charge de véhicule utilitaire

(30) Priorität: 14.11.2005 DE 102005054538
(43) Veröffentlichungstag der Anmeldung: 16.05.2007
(73) Patentinhaber: Fahrzeugwerk Bernard Krone GmbH, 48480 Spelle (DE)
(72) Erfinder: Krone, Bernard, 48480 Spelle (DE)
(74) Vertreter: Busse & Busse Patentanwälte

(56) Entgegenhaltungen:
- WO-A-2004/001149
- WO-A-2004/071885
- GB-A- 2 241 516
- US-A1- 2005 042 432

## Beschreibung

Die Erfindung bezieht sich auf einen Aufbau für Transportfahrzeuge, beispielsweise auf einen Kofferaufbau für Kühlfahrzeuge, in einer Ausbildung nach dem Oberbegriff des Patentanspruches 1.

Aufbauten für Transportfahrzeuge, insbesondere Aufbauten für Kühlfahrzeuge haben das beispielsweise tiefgekühlt oder gekühlt zu transportierende Transportgut sicher und entsprechend der geforderten Transporttemperatur mitunter über lange Transportwege unter unterschiedlichsten klimatischen Außenbedingungen zu transportieren. Sollen zu solchen Zwecken dickwandige Wärmedämmschichten eingesetzt werden, die sich über das ansonsten erforderliche Maß von Wandstärken bzw. von Dicken von Boden- und Deckenelementen hinauserstrecken, ist der Transportinnenraum deutlich verkleinert, was zu Lasten der Forderung nach einer Maximierung des Transportvolumens geht.

Aus der WO2004/071885 A2 ist bekann, Wärmedämmelemente zwischen den inneren und äußeren Deckschichten anzuordnen, deren Wärmedämmwirkungsgrad jedoch vielfach zu wünschen übrig läßt. Das führt dazu, daß Kühlaggregate mit einer entsprechenden hohen Kühlleistung vorzusehen sind, die insbesondere bei hohen Außentemperaturen immense Kühlaggregatlaufzeiten nach sich ziehen mit einem entsprechenden Kühlaggregateenergiebedarf. Das wirkt sich ungünstig auf die Energiekosten für das gesamte Transportfahrzeug aus und damit letztendlich nachteilig auf die Transportkosten.

Aus der EP 1 045 079 ist ein Kofferaufbau für Kühlfahrzeuge der eingangs genannten Art bekannt, bei der Vakuumisolationsteile eingebettet sind innerhalb eines Urethanschaums, wobei sich der Urethanschaum bis zur inneren und der äußeren Deckschicht erstreckt. Zusätzlich können noch zwischen die Isolationspaneele mehrere Schutzelemente aus beispielsweise einem nicht expandierenden Kunststoffschaum eingebracht werden. Nachteilig hierbei ist, dass durch die Einbettung der Vakuumisolationspaneele in einen Kunststoffschaum insgesamt eine lagefixierte Anordnung vor Einbringen des Schaumes wesentlich erschwert ist.

Es ist Aufgabe der vorliegenden Erfindung, einen Aufbau für Transportfahrzeuge mit einer verbesserten Wärmedämmung zur Verfügung zu stellen, bei der auf Lage fixierte Vakuumisolationspaneele vorzusehen sind.

Zur Lösung dieser Aufgabe zeichnet sich der Aufbau für Transportfahrzeuge durch die im Patentanspruch 1 angegebenen Merkmale aus. Hinsichtlich wesentlicher weiterer vorteilhafter Ausgestaltungen wird auf die Patentansprüche 2 bis 10 verwiesen.

Damit ist ein Aufbau für Transportfahrzeuge zur Verfügung gestellt, bei dem zwischen der inneren und der äußeren Deckschicht eine Struktur aus aneinander gereihten Vakuumisolationspaneelen, Kleberschichten und Schaumschichten vorgesehen ist. Die Schaumschichten können dabei als Blockschaumschichten oder aber auch als Schichten aus einem vor Ort geschäumten Schaummaterial wie beispielsweise PUR-Schaum gebildet sein. Zwischen den Vakuumisolationspaneelen ist eine Struktur als Stützkorsett aus Schaumträgerelementen vorgesehen, so daß bei dem Aufbau nach der Erfindung sich eine Gesamtaufbaustruktur ergibt, bei der eine innere Deckschicht, beispielsweise aus einem GFK- oder Stahlblechmaterial, zunächst mit einer Kleberschicht versehen ist, auf die einzelne Vakuumisolationspaneele für einen innigen Stützverbund mit der inneren Deckschicht anzubringen sind. Diese Vakuumisolationspaneele sind bevorzugtermaßen plattenförmig ausgebildet und haben vorzugsweise ebene Stirnkanten. An diese einander zugewandten Stirnkanten von aneinander zu reihenden Vakuumisolationspaneelen sind die entsprechenden Schaumträgerelemente zu setzen, die ihrerseits mit einer Kleberschicht mit den Stirnkanten der Vakuumisolationspaneele zu verbinden sind. Der verbleibende Raum zu den äußeren Deckschichten der Aufbauwandung ist wiederum unter Zwischenlage einer Kleberschicht mit Blockschaumelementen oder einem vor Ort ausschäumbaren Schaummaterial auszukleiden, wobei im Falle des Einsatzes von Blockschaumelementen wiederum zwischen diesen Blockschaumelementen und der äußeren Deckschicht eine Kleberschicht vollflächig aufgebracht wird. Im Falle von aufgeschäumtem Schaummaterial kann dieses gleichzeitig als Klebermaterial für die äußere Deckschicht wirken, und z.B. unter Druck ausgehärtet werden.

Dadurch, dass die Schaumträgerelemente für das Stützkorsett durch Schaumplattenelemente gebildet sind, die mit einander zugewandten Stirnkanten der Vakuumisolationspaneele verklebt sind, ist sichergestellt, dass die Vakuumisolationspaneele auch an ihren Stirnkanten sicher in die Kleberschicht eingebettet sind. Dadurch ist auch sichergestellt, dass die Vakuumisolationspaneele durch die Stützträgerelemente als Stützkorsett sicher und geschützt Bestandteil der inneren Auskleidung zwischen den Deckschichten sind.

Insgesamt ist damit ein Aufbau geschaffen, bei der die Vakuumisolationspaneele sowohl in das innere Stützkorsett wie auch lagefixiert und daher vor Beschädigungen sicher geschützt dem Aufbauinnenraum zugewandt zwischen den Deckschichten vorzusehen sind, wobei die jeweiligen Kleberschichten, bevorzugt jeweils in einer Dicke von ca. 2 mm, für eine lagefixierte Anordnung einerseits und einen Schutz vor mechanischen äußeren Einflüssen darbieten. Das Isolationsverhalten der Vakuumisolationspaneele ist hervorragend, so daß die Wärmedurchgangswerte k für den gesamten Aufbau wesentlich zu verringern sind. Damit gehen entscheidende Vorteile einher, indem der Energieverbrauch von Kühlaggregaten wesentlich zu verringern ist. Kühlaggregate können kleiner als bislang dimensioniert werden, wobei dünnere Wandbereiche bei gleichartiger Isolierwirkung vorgesehen werden können mit dem Ergebnis eines optimierten Laderaumvolumens, wobei im Einzelfall auch ein überlappender Einbau von Vakuumisolationspaneelen möglich ist an thermisch stark beanspruchten Bereichen.

Darüber hinaus weisen Vakuumisolationspaneele aufgrund ihrer Einbettung und ihrer vakuumisolierten Anordnung eines Kernmaterials innerhalb einer Folie eine ausgesprochen hohe Alterungsbeständigkeit auf. Sollten einzelne Vakuumisolationselemente einmal beschädigt sein, verlieren sie gleichwohl nicht ihre sehr gute Isolierfähigkeit.

Des weiteren ist aufgrund der weit verbesserten Wärmedämmung die Notlaufeigenschaft eines derartigen Aufbaus verbessert bei Ausfall eines Kühlaggregates durch die verbesserte Isolierwirkung des Aufbaus. Wegen auch verringerter Betriebszeiten des Kühlaggregates ist die Lärmbelästigung, die durch das Kühlaggregat ausgeht, ebenfalls vermindert.

Weitere Ausgestaltungen und Vorteile der Erfindung ergeben sich aus der weiteren Beschreibung und der Zeichnung. In der Zeichnung zeigen:
- Fig. 1: in einer schematischen Seitenansicht ein Anhängerfahrzeug mit einem Ausführungsbeispiel eines Aufbaus nach der Erfindung; und

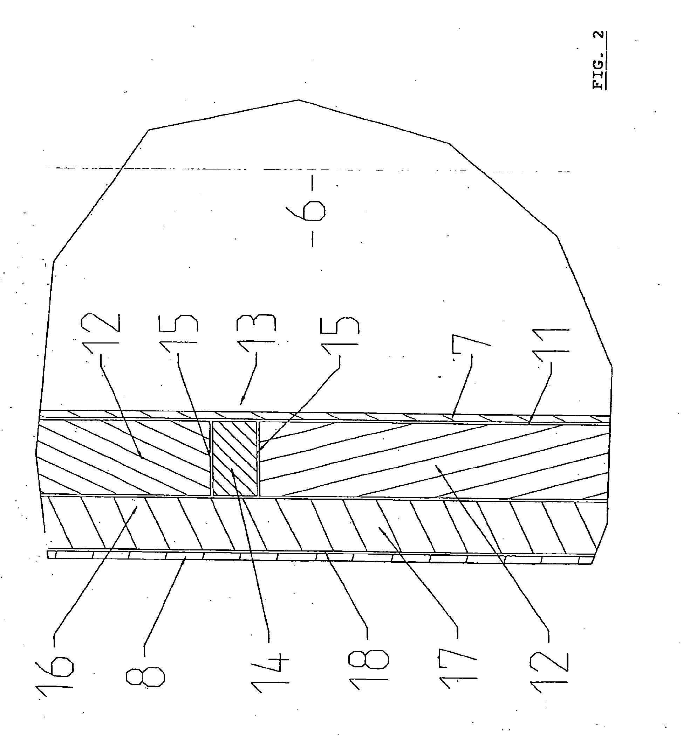

- Fig. 2: einen Querschnitt gemäß der Schnittlinie F-F in Fig. 1 durch eine Seitenwandung des Aufbaus.

In der Zeichnung sind nur die zum unmittelbaren Verständnis der Erfindung notwendigen Elemente eines Ausführungsbeispiels eines Aufbaus für ein Transportfahrzeug gezeigt.

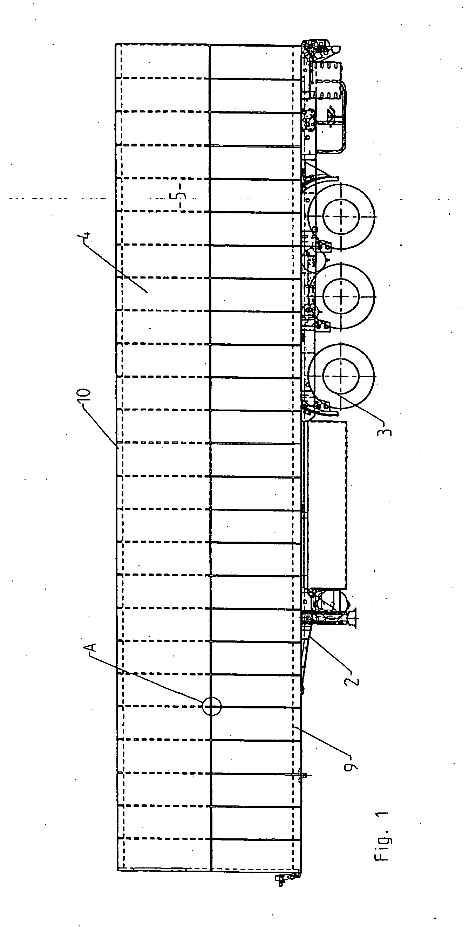

Allgemein mit 1 ist ein Anhängefahrzeug in Fig. 1 veranschaulicht, das auf einem Chassis 2, das über Achsen und Räder 3 abgestützt ist, einen allgemein mit 4 bezifferten Aufbau trägt. Dieser Aufbau hat allgemein mit 5 bezifferte Seitenwände und einem allgemein mit 6 skizzierten Aufbauinnenraum zugewandte innere Deckschichten 7 und eine äußere Deckschicht 8. Zudem sind noch Bodenelemente 9 sowie Deckenelemente 10 vorgesehen.

Die Seitenwandung umfaßt die bereits erwähnte innere Deckschicht 7 und die äußere Deckschicht 8, die beispielsweise aus einem GFK-Material aber auch aus Stahlblech bestehen können. Als innere Auskleidung hat diese einen speziellen Strukturaufbau. Diese Struktur umfaßt zunächst eine Kleberschicht 11, mit der Vakuumisolationspaneele 12 mit der inneren Deckschicht 7 vollflächig zu verkleben sind. Mit dieser Kleberschicht 11 lassen sich auch Unebenheiten ausgleichen. Diese Kleberschicht hat ca. eine Dicke von jeweils 2 mm und sichert das jeweilige Vakuumisolationspaneel 12 vollflächig und damit unverrückbar an der inneren Deckschicht 7, wobei die Kleberschicht 11 jeweils eine Schutzschicht darstellt. Die aneinander gereihten Vakuumisolationspaneele 12 haben jeweils geradlinige Stirnkanten, wobei die aufeinanderzu gerichteten Stirnkanten von zwei benachbarten Paneelen wiederum über eine Stützträgerstruktur aneinander gehalten sind. Diese Stützträgerstruktur 13 umfaßt ihrerseits Stützträgerelemente 14 in Gestalt von Schaumblockträgerschichten, die wiederum mit den Stirnkanten über jeweils eine Kleberschicht 15 mit den Stirnkanten der Vakuumisolationspaneele verbunden sind. Somit sind die Vakuumisolationspaneele auch an ihren Stirnkanten sicher in die Kleberschicht eingebettet und durch die Stützträgerelemente als Stützkorsett sicher und geschützt Bestandteil der inneren Auskleidung zwischen den Deckschichten 7 und 8.

Zur äußeren Deckschicht hin ausgerichtet sind die Vakuumisolationspaneele 12 wiederum mit einer Kleberschicht 16 versehen, bevorzugterweise wieder mit einer Schichtdicke von 2 mm. An diese Kleberschicht schließt sich eine Schicht 17 aus Blockschaum oder aus vor Ort zu schäumenden Kunststoffmaterial an, welches dann ebenfalls zu einer Schicht 17 führt. In dem Ausführungsbeispiel mit verwendetem Blockschaummaterial 17 ist zwischen der äußeren Deckschicht 8 und dem Blockschaum 17 wiederum eine Kleberschicht 18 vorgesehen, die den Blockschaum 17 unverrückbar und sicher an der äußeren Deckschicht 8 festhält. Insgesamt ist damit ein Aufbau zur Verfügung gestellt mit weit verbesserten Wärmedämmeigenschaften und den zuvor beschriebenen Vorteilen.

## Patentansprüche

1. Aufbau (4) für Transportfahrzeuge, beispielsweise Kofferaufbau für Kühlfahrzeuge, mit einem von Seitenwandungen (5) sowie Decken (10)- und Bodenelementen (9) umgrenzten Aufbauinnenraum (6), wobei die Wandungen (5) und/oder Decken- (10) und Bodenelemente (9) mit einer inneren (7) und äußeren Deckschicht (8) sowie einer zwischen den Deckschichten (7, 8) gelegenen Auskleidung versehen sind, wobei zwischen der inneren (7) und der äußeren Deckschicht (8) eine Struktur aus aneinander gereihten Vakuumisolationspaneelen (12), Kleberschichten (11, 15, 16,18) und Schaumschichten (17) vorgesehen ist, **dadurch gekennzeichnet, daß** die Vakuumisolationspaneele (12) über eine Kleberschicht (11) mit der inneren Deckschicht (7) verbunden sind und zwischen den Vakuumisolationspaneelen (12) und der äußeren Deckschicht (8) ein Kunststoffschaum (17) sowie zwischen Vakuumisolationspaneelen (12) ein Stützkorsett aus Schaumträgerelementen (14) vorgesehen ist, wobei die Schaumträgerelemente (14) für das Stützkorsett durch Schaumplattenelemente gebildet sind, die mit einander zugewandten Stirnkanten der Vakuumisolationspaneele (12) verklebt sind.

2. Aufbau nach Anspruch 1, **dadurch gekennzeichnet, daß** zwischen den Vakuumisolationspaneelen (12) und der äußeren Deckschicht (8) ein Blockschaum (17) vorgesehen ist.

3. Aufbau nach Anspruch 1, **dadurch gekennzeichnet, daß** zwischen der äußeren Deckschicht (8) und den Vakuumisolationspaneelen (12) ein geschäumter Schaum vorgesehen ist.

4. Aufbau nach einem der Ansprüche 1 bis 3, **dadurch gekennzeichnet, daß** zwischen der inneren Deckschicht (7) und den Vakuumisolationspaneelen (12) eine Kleberschicht von ca. 2 mm Dicke vorgesehen ist.

5. Aufbau nach einem der Ansprüche 2 bis 4, **dadurch gekennzeichnet, daß** zwischen den Vakuumisolationspaneelen (12) und dem Blockschaum (17) eine weitere Kleberschicht (16) vorgesehen ist.

6. Fahrzeugaufbau nach Anspruch 5, **dadurch gekennzeichnet, daß** die weitere Kleberschicht (16) eine Dicke von ca. 2 mm aufweist.

7. Aufbau nach Anspruch 6, **dadurch gekennzeichnet, daß** die Schichtdicke der Kleberschicht (15) zwischen dem Schaumträgerlement und den Stirnkanten der Vakuumisolationspaneelen (12) ca. 2 mm ist.

8. Fahrzeugaufbau nach einem der Ansprüche 1 bis 6, **dadurch gekennzeichnet, daß** die innere Deckschicht (7) aus einem GFK-Material oder Stahl besteht.

9. Aufbau nach einem der Ansprüche 3 bis 8, **dadurch gekennzeichnet, daß** der geschäumte Schaum ein PUR-Schaummaterial ist.

10. Aufbau nach einem der Ansprüche 1 bis 9, **dadurch gekennzeichnet, daß** der geschäumte Schaum ein unter Druck aushärtbares Reaktionsgemisch ist.

11. Aufbau nach einem der Ansprüche 1 bis 10, **dadurch gekennzeichnet, daß** die Vakuumisolationspaneele (12) ein plattenförmiges, druckstabiles Kernmaterial aus einem verpreßten Pulver, einer Glasfaser oder einem offenporigen Kunststoffschaummaterial umfassen, das durch eine Folie gasdicht vakuumisoliert eingeschlossen ist.

## Claims

1. Body (4) for transporting vehicles, such for example as a box body for refrigerated vehicles, having an interior space (6) bounded by side-walls (5) and roof (10) and floor (9) members, the walls (5) and/or roof (10) and floor (9) members being provided with an inner (7) and outer (8) covering layer and a lining situated between the covering layers (7,8), a structure comprising vacuum insulated panels (12), layers of adhesive (11, 15, 16, 18) and layers of foam (17) which are lined up against one another being provided between the inner (7) and outer (8) covering layers, **characterized in that** the vacuum insulated panels (12) are connected to the inner covering layer (7) by a layer of adhesive (11) and a foam of plastics material (17) is provided between the vacuum insulated panels (12) and the outer covering layer (8) and a supporting foundation structure of foam supporting members (14) is provided between vacuum insulated panels (12), the foam supporting members (14) for the supporting foundation structure being formed by foam bar members which are adhesive-bonded to end-edges adjacent to one another of the vacuum insulated panels (12).

2. Body according to claim 1, **characterized in that** a block foam (17) is provided between the vacuum insulated panels (12) and the outer covering layer (8).

3. Body according to claim 1, **characterized in that** a foamed foam is provided between the outer covering layer (8) and the vacuum insulated panels (12).

4. Body according to one of claims 1 to 3, **characterized in that** a layer of adhesive approximately 2 mm thick is provided between the inner covering layer (7) and the vacuum insulated panels (12).

5. Body according to one of claims 2 to 4, **characterized in that** a further layer of adhesive (16) is provided between the vacuum insulated panels (12) and the block foam (17).

6. Vehicle body according to claim 5, **characterized in that** the further layer of adhesive (16) is approximately 2 mm thick.

7. Body according to claim 6, **characterized in that** the thickness of the layer of adhesive (15) between the foam supporting member and the end-edges of the vacuum insulated panels (12) is approximately 2 mm.

8. Vehicle body according to one of claims 1 to 6, **characterized in that** the inner covering layer (7) is composed of a glass-fibre reinforced plastics material or steel.

9. Body according to one of claims 3 to 8, **characterized in that** the foamed form is a polyurethane foam material.

10. Body according to one of claims 1 to 9, **characterized in that** the foamed foam is a reactive mixture which can be cured under pressure.

11. Body according to one of claims 1 to 10, **characterized in that** the vacuum insulated panels (12) comprise a core material which is in slab form and stable against pressure and which is made of a compressed powder, glass fibre or open-pored plastics foam material which is enclosed to be vacuum insulated by a film or foil giving a gas-tight seal.

## Revendications

1. Superstructure (4) pour véhicules utilitaires, par exemple superstructure de coffre pour véhicules frigorifiques, avec un espace intérieur de superstructure (6) délimité par des parois latérales (5) ainsi que des éléments de plafond (10) et de fond (9), les parois (5) et/ou les éléments de plafond (10) et de fond (9) étant dotés d'une couche de recouvrement intérieure (7) et extérieure (8) ainsi que d'un revêtement situé entre les couches de recouvrement (7, 8), une structure formée de rangées de panneaux d'isolation sous vide (12), de couches de colle (11, 15, 16, 18) et de couches de mousse (17) étant prévue entre la couche de recouvrement intérieure (7) et la couche de recouvrement extérieure (8), **caractérisée en ce que** les panneaux d'isolation sous vide (12) sont reliés à la couche de recouvrement intérieure (7) par le biais d'une couche de colle (11) et une mousse synthétique (17) est prévue entre les panneaux d'isolation sous vide (12) et la couche de recouvrement extérieure (8) et un corset d'appui formé d'éléments supports de mousse (14) est prévu entre les panneaux d'isolation sous vide (12), les éléments supports de mousse (14) pour le corset d'appui étant formés par des éléments formant plaque de mousse qui sont collés avec des arêtes frontales tournées les unes vers les autres des panneaux d'isolation sous vide (12).

2. Superstructure selon la revendication 1, **caractérisée en ce qu'**un bloc de mousse (17) est prévu entre les panneaux d'isolation sous vide (12) et la couche de recouvrement extérieure (8).

3. Superstructure selon la revendication 1, **caractérisée en ce qu'**une mousse expansée est prévue entre la couche de recouvrement extérieure (8) et les panneaux d'isolation sous vide (12).

4. Superstructure selon l'une quelconque des revendications 1 à 3, **caractérisée en ce qu'**une couche de colle d'environ 2 mm d'épaisseur est prévue entre la couche de recouvrement intérieure (7) et les panneaux d'isolation sous vide (12).

5. Superstructure selon l'une quelconque des revendications 2 à 4, **caractérisée en ce qu'**une autre couche de colle (16) est prévue entre les panneaux d'isolation sous vide (12) et le bloc de mousse (17).

6. Superstructure selon la revendication 5, **caractérisée en ce que** l'autre couche de colle (16) a une épaisseur d'environ 2 mm.

7. Superstructure selon la revendication 6, **caractérisée en ce que** l'épaisseur de la couche de colle (15) entre l'élément support de mousse et les arêtes frontales des panneaux d'isolation sous vide (12) est d'environ 2 mm.

8. Superstructure de véhicule selon l'une quelconque des revendications 1 à 6, **caractérisée en ce que** la couche de recouvrement intérieure (7) est en matériau GFK ou en acier.

9. Superstructure selon l'une quelconque des revendications 3 à 8, **caractérisée en ce que** la mousse expansée est une mousse PUR.

10. Superstructure selon l'une quelconque des revendications 1 à 9, **caractérisée en ce que** la mousse expansée est un mélange réactionnel thermodurcissable sous pression.

11. Superstructure selon l'une quelconque des revendications 1 à 10, **caractérisée en ce que** les panneaux d'isolation sous vide (12) comprennent un matériau de noyau en forme de plaque indéformable en poudre comprimée, en fibre de verre ou en mousse synthétique à pores ouverts, qui est enfermé isolé sous vide de manière étanche aux gaz par une feuille.
